# EUROPÄISCHE PATENTANMELDUNG

(11) **EP 3 205 432 A1**
(43) Veröffentlichungstag der Anmeldung: **16.08.2017**
(21) Anmeldenummer: 17154157.6
(22) Anmeldetag: 01.02.2017
(51) Int. Cl.: B23K 1/00, B23K 1/19, B23K 1/20, B23K 35/02, B23K 101/42

(54) **VERFAHREN ZUM AUSBILDEN EINER LÖTVERBINDUNG UNTER VERWENDUNG EINER METALLISCHEN GITTER**

(30) Priorität: 15.02.2016 DE 102016202231
(71) Anmelder: Robert Bosch GmbH, 70442 Stuttgart (DE)
(72) Erfinder: Holz, Rainer, 71672 Marbach (DE); Herberholz, Timo, 70188 Stuttgart (DE); Feil, Daniel, 70186 Stuttgart (DE)

(57) **Zusammenfassung**

Die Erfindung betrifft ein Verfahren zum Ausbilden einer Lötverbindung, wobei zwischen einem Trägerelement (2) und einem mit dem Trägerelement (2) zu verbindenden Bauteil (1) eine metallische Gitterstruktur (10) sowie ein Hohl- oder Zwischenräume (11) der Gitterstruktur (10) ausfüllendes Lotmaterial (15) angeordnet wird. Es ist vorgesehen, dass das Einbringen des Lotmaterials (15) in die Hohl- oder Zwischenräume (11) vor dem Durchführen einer Wärmebehandlung erfolgt, bei dem das Lotmaterial (15) aufgeschmolzen wird.

## Beschreibung

### Stand der Technik

Die Erfindung betrifft ein Verfahren zum Ausbilden einer Lötverbindung nach dem Oberbegriff des Anspruchs 1. Ferner betrifft die Erfindung die Verwendung des erfindungsgemäßen Verfahrens.

Ein Verfahren zum Ausbilden einer Lötverbindung nach dem Oberbegriff des Anspruchs 1 ist aus der DE 34 42 537 A1 bekannt. Das bekannte Verfahren dient insbesondere der Befestigung eines großflächigen Halbleiter-Bauelements auf einem als Substrat ausgebildeten Trägerelement. Das bekannte Verfahren zeichnet sich dadurch aus, dass zwischen dem Bauelement und dem Trägerelement neben einer Lötschicht zusätzlich eine metallische Gitterstruktur angeordnet ist. Durch die metallische Gitterstruktur, die Durchgangsöffnungen in Form von Schlitzen aufweist, die von dem Material der Lötschicht beim Verlöten ausgefüllt werden, lässt sich zwischen dem Bauelement und dem Trägerelement ein definierter Abstand einstellen, so dass insbesondere ein Verkippen des Bauelements in Bezug zur Ebene des Trägerelements verhindert wird. Weiterhin zeichnet sich das bekannte Verfahren dadurch aus, dass zunächst auf dem Substrat bzw. dem Trägerelement die metallische Gitterstruktur aufgelegt bzw. angeordnet wird. Danach erfolgt das Aufbringen einer (flächigen) Lotfolie zur Ausbildung der Lötschicht auf der Gitterstruktur auf der dem Trägerelement abgewandten Seite der Gitterstruktur. Zuletzt wird das Bauelement auf die Lotfolie aufgebracht und durch ein Gewicht beschwert. Der so ausgebildete Verbund wird anschließend in einem Ofen auf die zur Ausbildung der Lötverbindung erforderliche Temperatur erwärmt, bei der das Material der Lotfolie verflüssigt wird und in die Hohl- bzw. Zwischenräume der Gitterstruktur eindringt. Dabei verringert sich gleichzeitig der Abstand zwischen dem Trägerelement und dem Bauelement derart, dass das Gitterelement an der Oberfläche des Trägerelements und des Bauelements anliegt. Dadurch, dass die Lötschicht bzw. die Lotfolie lediglich an einer Seite der Gitterstruktur (vor dem Ausbilden der Lötverbindung) angeordnet wird und die andere Seite der Gitterstruktur unmittelbar auf dem Trägerelement aufliegt, wird zwar einerseits eine plane bzw. parallele Anordnung zwischen dem Trägerelement und dem Bauelement erzielt, andererseits jedoch eine Benetzung der Gitterstruktur auf der dem Trägerelement zugewandten Seite verhindert bzw. erschwert.

### Offenbarung der Erfindung

Ausgehend von dem oben dargestellten Stand der Technik liegt der Erfindung die Aufgabe zugrunde, ein Verfahren zum Ausbilden einer Lötverbindung nach dem Oberbegriff des Anspruchs 1 derart weiterzubilden, dass bei Ausbildung einer hinsichtlich der Festigkeit optimierten Lötverbindung gleichzeitig ein herstellungstechnisch vorteilhafter Herstellprozess der Lötverbindung ermöglicht wird.

Diese Aufgabe wird erfindungsgemäß beim Verfahren zum Ausbilden einer Lötverbindung mit den Merkmalen des Anspruchs 1 gelöst. Der Erfindung liegt die Idee zugrunde, bereits vor dem Aufschmelzen des Lotmaterials sicherzustellen, dass das Lotmaterial in den Hohl- bzw. Zwischenräumen der Gitterstruktur in der benötigten Menge vorliegt, um die Hohl- bzw. Zwischenräume der Gitterstruktur beim anschließenden Ausbilden der Lötverbindung durch die Wärmebehandlung vollständig ausfüllen zu können. Konkret wird vorgeschlagen, dass das Einbringen des Lotmaterials in die Hohl-oder Zwischenräume vor dem Ausführen der Wärmebehandlung erfolgt, bei dem das Lotmaterial aufgeschmolzen wird. Ein derartiges Vorgehen hat insbesondere den Vorteil, dass das Lotmaterial beispielsweise durch einen geeigneten Dosierprozess oder durch sonstige Maßnahmen gezielt in die Hohl- bzw. Zwischenräume eingebracht wird in einem Stadium, bei dem dieses Einbringen des Lotmaterials besonders einfach gesteuert bzw. überwacht werden kann.

Vorteilhafte Weiterbildungen des erfindungsgemäßen Verfahrens zum Ausbilden einer Lötverbindung sind in den Unteransprüchen aufgeführt.

In einer ersten prinzipiellen Ausgestaltung des erfindungsgemäßen Verfahrens ist es vorgesehen, dass das Lotmaterial von außen her, vorzugsweise auf mechanische oder pneumatische Art und/oder durch mechanische Hilfsmittel in die Hohl- oder Zwischenräume der Gitterstruktur eingebracht wird. Ein derartiges Verfahren hat den Vorteil, dass an sich bekannte Verfahren zum Dosieren bzw. Einbringen des Lotmaterials in die Hohl- oder Zwischenräume verwendet werden können. Gemeint sind hierbei Verfahren wie Drucken, Dispensen, oder die Verwendung von Lotformteilen. Darüber hinaus hat dieses Verfahren den Vorteil, dass relativ einfache metallische Gitterstrukturen, z.B. in Form von Gittergeflechten oder metallischen Schäumen verwendet werden können.

In Weiterbildung des zuletzt gemachten Vorschlags ist es zur weiteren Vereinfachung des Verfahrens vorgesehen, dass das Lotmaterial auf das Trägerelement und/oder das Bauteil aufgebracht wird, und dass anschließend das Trägerelement und/oder das Bauteil in Kontakt mit der Gitterstruktur gebracht werden/wird. Mit anderen Worten gesagt bedeutet dies, dass das Bauteil bzw. das Trägerelement in Art eines Werkzeugs bzw. Pressstempels verwendet wird, um das Lotmaterial in die Hohl- bzw. Zwischenräume der Gitterstruktur einzubringen.

In grundsätzlich alternativer erfindungsgemäßer Ausgestaltung des Verfahrens ist es vorgesehen, dass die Gitterstruktur als geflochtene Gitterstruktur mit fadenförmigen Elementen ausgebildet ist, wobei ein erstes Element durch einen insbesondere aus Kupfer bestehenden Faden und ein zweites Element durch einen zumindest Lotmaterial enthaltenen Faden gebildet ist. Das Material der beiden Fäden unterscheidet sich insbesondere auch dadurch, dass das Material des das Lotmaterial enthaltenen Fadens eine niedrigere Schmelztemperatur aufweist als das Material des anderen Fadens, der beispielsweise aus Kupfer oder einem anderen Metall besteht. Ein derartiges Verfahren hat insbesondere den Vorteil, dass das Fügen bzw. Anordnen der Materialien zwischen dem Bauteil und dem Trägerelement wesentlich vereinfacht wird, da lediglich die Gitterstruktur zwischen den genannten Elementen positioniert werden muss, nicht jedoch (wie beim eingangs erwähnten Stand der Technik) zusätzliche Lotschichten.

Für die bevorzugten Anwendungen des erfindungsgemäßen Verfahrens, beispielsweise zur Anbindung von Kühlkörpern oder ähnlichen Elementen an wärmeabgebenden Bauteilen, hat es sich als vorteilhaft erwiesen, wenn der Durchmesser der fadenförmigen Elemente zwischen 0,1 mm und 1,0mm beträgt.

Zur Vereinfachung des Lötprozesses ist es vorgesehen, dass das zweite Element zusätzlich Flussmaterial, insbesondere in Form einer aus Flussmaterial bestehenden Seele enthält. Ein derartiges Verfahren hat insbesondere den Vorteil, dass auf zusätzliche Applikationen von Flussmitteln verzichtet werden kann. Insbesondere ist es dann nicht mehr erforderlich, beispielsweise die Fügepartner vor dem Verlöten mit Flussmittel zu beschichten oder unter Einsatz gasförmiger Flussmittel (Ameisensäure, Formiergas usw.) zu verlöten.

Zur Ausbildung besonders fester und temperaturbeständiger Lötverbindungen hat es sich als vorteilhaft erwiesen, wenn die Gitterstruktur Kupfer, Nickel, Eisen, Titan oder Legierungen davon aufweist, und wenn beim Ausbilden der Lötverbindung intermetallische Phasen gebildet werden, deren Schmelztemperatur höher ist als die Schmelztemperatur des Lotmaterials.

Wesentlich für die Erfindung ist es auch, dass der Anteil der metallischen Gitterstruktur im Verhältnis zum Lotmaterial möglichst hoch ist, derart, dass das Lotmaterial im Wesentlichen nur dazu dient, die Hohlräume bzw. Zwischenräume der metallischen Gitterstruktur auszufüllen, um porenfreie Verbindungen zu ermöglichen. Hierbei ist es besonders vorteilhaft, wenn das Volumen des Lotmaterials lediglich etwas mehr, vorzugsweise maximal 10% mehr als das Volumen der Hohl- oder Zwischenräume der Gitterstruktur beträgt.

Weiterhin hat es sich als vorteilhaft erwiesen, wenn zwischen der Gitterstruktur und dem Bauteil bzw. dem Trägerelement möglichst kleine Lotspalte ausgebildet sind. Hierbei ist es besonders bevorzugt, wenn nach dem Lötvorgang die Schichtdicke des Lotmaterials zwischen der Gitterstruktur und dem Bauteil bzw. dem Trägerelement weniger als 20um beträgt. Die sich in den engen Lötspalten ausbildenden brückenartigen intermetallischen Phasen wirken sich in diesem Fall besonders festigkeitssteigernd aus.

Besonders bevorzugt ist die Verwendung des soweit beschriebenen Verfahrens bei Gitterstrukturen, deren Fläche mehr als 10mm² aufweist. Bei derartig großen Gitterstrukturen lässt sich beispielsweise das Lotmaterial besonders einfach und sicher durch entsprechend ausgebildete Werkzeuge bzw. Hilfsmittel in die Hohl-bzw. Zwischenräume der Gitterstruktur einbringen. Darüber hinaus ist die Verarbeitung derartig großer Gitterstrukturen vorrichtungstechnisch auch einfacher als bei kleineren Gitterstrukturen.

Um sicherzustellen, dass zwischen dem Bauteil und dem Trägerelement eine plane Anordnung nach dem Ausbilden der Lötverbindung vorliegt, ist es darüber hinaus bevorzugt vorgesehen, dass während des Lötprozesses eine senkrecht zur Ebene des Trägerelements und des Bauteils wirkende Anpresskraft auf die Fügepartner ausgeübt wird.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1 bis Fig. 3: jeweils im Längsschnitt, unterschiedliche Phasen während der Herstellung einer Lötverbindung zwischen einem Bauteil und einem Trägerelement und
- Fig. 4 und Fig. 5: ein alternatives Verfahren zur Herstellung einer Lötverbindung unter Verwendung unterschiedlich geflochtener metallischer Gitterstrukturen, wobei die Gitterstrukturfäden Lotmaterial enthalten, jeweils im Längsschnitt sowie in Draufsicht auf die Gitterstruktur.

Gleiche Elemente bzw. Elemente mit gleicher Funktion sind in den Figuren mit den gleichen Bezugsziffern versehen.

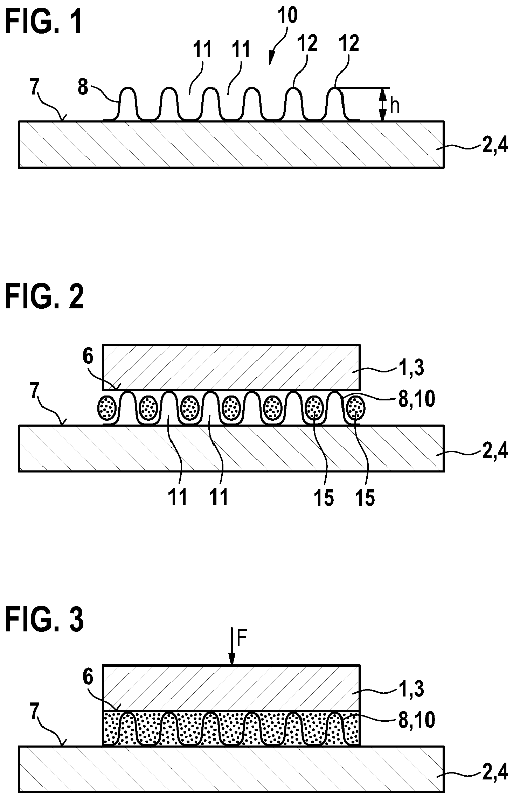

In den Fig. 1 bis 3 ist ein erstes Verfahren zur Herstellung einer Lötverbindung zwischen einem Bauteil 1 und einem Trägerelement 2 dargestellt. Bei dem Bauteil 1 handelt es sich beispielsweise, und nicht einschränkend, um ein wärmeabgebendes Bauelement bzw. Substrat 3 und bei dem Trägerelement 2 um einen aus Aluminium bestehenden Kühlkörper 4. Das Bauteil 1 und das Trägerelement 2 weisen auf einander zugewandten Seiten im Überdeckungsbereich jeweils ebene Stirnflächen 6, 7 auf. Zur Ausbildung der Lötverbindung zwischen dem Bauteil 1 und dem Trägerelement 2 wird entsprechend der Fig. 1 in einem ersten Schritt auf die Stirnfläche 6 des Trägerelements 2 zunächst ein schlaufenförmig ausgebildetes Metallbändchen 8 aufgebracht. Das Metallbändchen 8 bildet eine metallische Gitterstruktur 10 aus, die Hohl- bzw. Zwischenräume 11 aufweist. Insbesondere können dabei mehrere, senkrecht zur Zeichenebene der Fig. 1 bis 3 angeordnete, parallel und beabstandet zueinander angeordnete Metallbändchen 8 vorgesehen sein.

Das Metallbändchen 8 besteht beispielsweise aus Aluminium und Kupfer oder aus Kupfer. Über die Anzahl und die Geometrie sowie den Abstand der Schleifen 12 des Metallbändchens 8 lässt sich zum einen die Höhe h der Gitterstruktur 10 beeinflussen, und zum anderen auch die Eigenschaften der Lötverbindung. So ist es für Anwendungen, die auf eine hohe Temperaturstabilität und gute Wärmeleitfähigkeit abzielen vorteilhaft, beispielsweise durch breite Metallbändchen 8 eine große Anbindungsfläche des Metallbändchens 8 an das Trägerelement 2 zu erreichen. Für einen geringen thermischen Widerstand muss eine möglichst große Kontaktfläche zwischen dem Metallbändchen 8 und dem Trägerelement 10 bestehen, zum anderen sollte die Höhe h des über die Stirnfläche 6 des Trägerelements 2 ragenden Metallbändchens 8 möglichst gering sein. Das Verbinden des Metallbändchens 8 bzw. Ausbilden der Schlaufen erfolgt gemäß dem Stand der Technik vorzugsweise durch Bonden.

Anschließend wird entsprechend der Darstellung der Fig. 2 Lotmaterial 15 in die Zwischenräume 11 der metallischen Gitterstruktur 10 eingebracht. Dies erfolgt im dargestellten Ausführungsbeispiel beispielhaft dadurch, dass die der metallischen Gitterstruktur 10 zugewandte Stirnfläche 6 des Bauteils 1 mit dem Material des Lotmaterials 10 beschichtet bzw. bedeckt wird und das Bauteil 1 anschließend gegen die Oberseite der metallischen Gitterstruktur 10 gebracht wird, so dass das Lotmaterial 15 in die Zwischenräume 11 der metallischen Gitterstruktur 10 eindringt und dabei die Hohl- bzw. Zwischenräume 11 der metallischen Gitterstruktur 10 auch in den Ebenen zwischen den Metallbändchen 8 vollständig ausfüllt.

Anschließend erfolgt entsprechend der Darstellung der Fig. 3 eine Wärmebehandlung des so ausgebildeten Bauteileverbunds (beispielsweise in einem Wärmeofen), bei dem das Material des Lotmaterials 15 auf eine Temperatur oberhalb seiner Schmelztemperatur erwärmt wird, wobei jedoch die Temperatur geringer ist als die Schmelztemperatur der metallischen Gitterstruktur 10. Vorzugsweise ist zur Sicherstellung der planen Auflage des Bauteils 1 auf dem Trägerelement 10 vorgesehen, dass beispielsweise auf das Bauteil 1 eine senkrecht zur Ebene des Bauteils 1 bzw. des Trägerelements 2 wirkende Anpresskraft F ausgeübt wird.

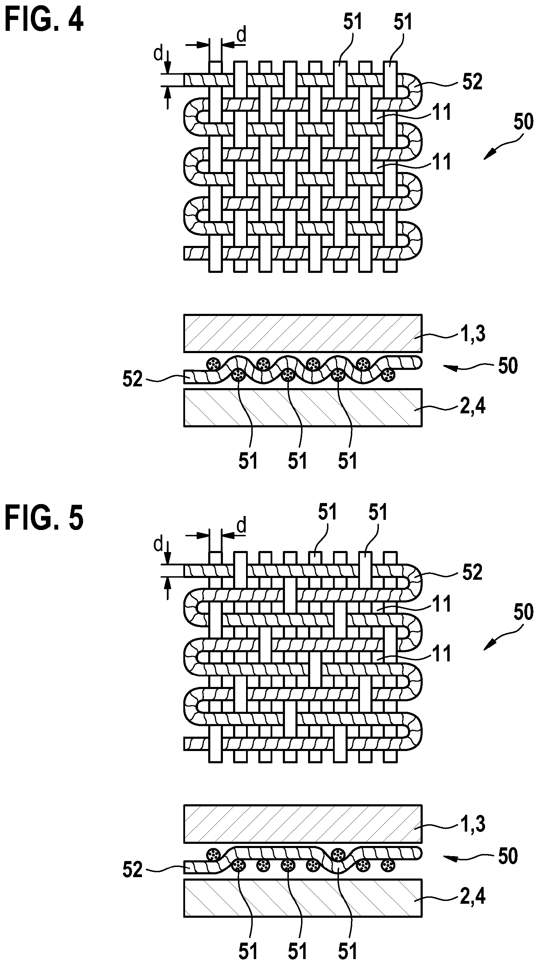

In den Fig. 4 und 5 ist eine alternative Möglichkeit zur Ausbildung der Lötverbindung zwischen dem Bauteil 1 und dem Trägerelement 2 dargestellt. Wesentlich dabei ist, dass die metallische Gitterstruktur 50 aus wenigstens zwei miteinander verflochtenen metallischen Fäden 51, 52 besteht. Der wenigstens eine Faden 51 besteht beispielsweise aus Kupfer, während der wenigstens eine andere Faden 52 das Lotmaterial enthält. Die Dicke bzw. der Durchmesser d des Fadens 51 beträgt vorzugsweise zwischen 0,1 mm und 1,0mm. Die Dicke bzw. der Durchmesser d des zweiten Fadens 52 kann entweder in Analogie zur Dicke bzw. im Durchmesser d des ersten Fadens 51 ausgebildet sein, jedoch auch eine andere Dicke bzw. einen anderen Durchmesser d aufweisen. Weiterhin kann der das Lotmaterial enthaltende zweite Faden 52 zusätzlich eine Seele aus Flussmittel enthalten (nicht dargestellt).

Entsprechend der Darstellung der Fig. 4 kann das Flechtmuster zwischen den beiden Fäden 51, 52 derart ausgebildet sein, dass sich auf der Seite des Bauteils 1 bzw. des Trägerelements 2 der zweite Faden 52 mit dem ersten Faden 51 abwechselt. Es ist somit ein homogenes, regelmäßiges Flecht- bzw. Webmuster ausgebildet. Dadurch ist jeweils gleich viel Material des zweiten Fadens 52 auf den jeweiligen Stirnflächen 6, 7 des Bauteils 1 bzw. des Trägerelements 2 angeordnet.

Bei dem in der Fig. 5 dargestellten Ausführungsbeispiel sind die beiden Fäden 51, 52 derart verflochten, dass auf der dem Bauteil 1 zugewandten Seite jeweils vier unmittelbar nebeneinander angeordnete zweite Fäden 52 angeordnet sind, gefolgt von einem Faden 51 auf der dem Trägerelement 2 zugewandten Seite usw. Mit anderen Worten gesagt bedeutet dies, dass durch die Art der Flechtung die Materialdichte des zweiten Fadens 52 bzw. des Lotmaterials zum Bauteil 1 bzw. zum Trägerelement 2 beeinflusst werden kann.

Nach dem Einbringen der aus den beiden Fäden 51, 52 bestehenden metallischen Gitterstruktur 50 zwischen dem Bauteil 1 und dem Trägerelement 2 erfolgt in Analogie zum ersten Ausführungsbeispiel eine Wärmebehandlung mit dem Aufbringen vorzugsweise einer Anpresskraft F beispielsweise auf das Bauteil 1. Beim Erwärmen der metallischen Gitterstruktur 50 verflüssigt sich das (Lot-) Material des zweiten Fadens 52 und füllt die Zwischenräume bzw. Hohlräume zwischen den ersten Fäden 51 vollständig aus.

Ergänzend wird erläutert, dass in Abhängigkeit der verwendeten Materialien des Bauteils 1 bzw. des Trägerelements 2 sowie der Fäden 51, 52 die Stirnflächen 6, 7 des Bauteils 1 bzw. des Trägerelements 2 beispielsweise mit Beschichtungen versehen sein können (beispielsweise Kupfer) oder auf chemische oder physikalische Art und Weise behandelt sein können, um eine Benetzung bzw. Anbindung des Lotmaterials des zweiten Fadens 52 bzw. des Lotmaterials 15 zu verbessern bzw. zu ermöglichen.

Die soweit beschriebenen Verfahren können in vielfältiger Art und Weise abgewandelt bzw. modifiziert werden, ohne vom Erfindungsgedanken abzuweichen.

## Patentansprüche

1. Verfahren zum Ausbilden einer Lötverbindung, wobei zwischen einem Trägerelement (2) und einem mit dem Trägerelement (2) zu verbindenden Bauteil (1) eine metallische Gitterstruktur (10; 50) sowie ein Hohl- oder Zwischenräume (11) der Gitterstruktur (10; 50) ausfüllendes Lotmaterial (15; 52) angeordnet wird,
**dadurch gekennzeichnet,**
**dass** das Einbringen des Lotmaterials (15; 52) in die Hohl- oder Zwischenräume (11) vor dem Durchführen einer Wärmebehandlung erfolgt, bei dem das Lotmaterial (15; 52) aufgeschmolzen wird.

2. Verfahren nach Anspruch 1,
**dadurch gekennzeichnet,**
**dass** das Lotmaterial (15) von außen in die Hohl- oder Zwischenräume (11) der Gitterstruktur (10) eingebracht wird.

3. Verfahren nach Anspruch 2,
**dadurch gekennzeichnet,**
**dass** das Lotmaterial (15) auf das Trägerelement (2) und/oder das Bauteil (1) aufgebracht wird, und dass anschließend das Trägerelement (2) und/oder das Bauteil (1) in Kontakt mit der Gitterstruktur (10) gebracht werden/wird.

4. Verfahren nach Anspruch 1,
**dadurch gekennzeichnet,**
**dass** die Gitterstruktur (50) als fadenförmige Elemente aufweisende, insbesondere geflochtene Gitterstruktur (50) ausgebildet ist, wobei ein erstes Element durch einen insbesondere aus Kupfer bestehenden Faden (51) und ein zweites Element durch ein zumindest Lotmaterial (52) enthaltenden Faden gebildet ist.

5. Verfahren nach Anspruch 4,
**dadurch gekennzeichnet,**
**dass** der Durchmesser (d) der fadenförmigen Elemente zwischen 0,1 mm und 1,0mm beträgt.

6. Verfahren nach Anspruch 4 oder 5,
**dadurch gekennzeichnet,**
**dass** der das Lotmaterial (52) enthaltende Faden zusätzlich Flussmaterial, insbesondere in Form einer aus Flussmaterial bestehenden Seele, enthält.

7. Verfahren nach einem der Ansprüche 1 bis 6,
**dadurch gekennzeichnet,**
**dass** die Gitterstruktur (10; 50) Kupfer, Nickel, Eisen, Titan oder Legierungen davon aufweist, und dass beim Ausbilden der Lötverbindung intermetallische Phasen gebildet werden, deren Schmelztemperatur höher ist als die Schmelztemperatur des Lotmaterials (15; 52).

8. Verfahren nach einem der Ansprüche 1 bis 7,
**dadurch gekennzeichnet,**
**dass** das Volumen des Lotmaterials (15; 52) lediglich etwas mehr, vorzugsweise maximal 10% mehr als das Volumen der Hohl- oder Zwischenräume (11) der Gitterstruktur (10; 50) beträgt.

9. Verfahren nach Anspruch 8,
**dadurch gekennzeichnet,**
**dass** zwischen der Gitterstruktur (10; 50) und dem Trägerelement (2) sowie zwischen der Gitterstruktur (10; 50) und dem Bauteil (1) nach dem Lötvorgang jeweils ein Schichtdicke des Lotmaterials (15; 52) von weniger als 20µm ausgebildet ist.

10. Verfahren nach einem der Ansprüche 1 bis 9,
**dadurch gekennzeichnet,**
**dass** die Gitterstruktur (10; 50) eine Fläche von mehr als 10mm² aufweist.

11. Verfahren nach einem der Ansprüche 1 bis 10,
**dadurch gekennzeichnet,**
**dass** während des Lotprozesses eine senkrecht zur Ebene des Trägerelements (2) und des Bauteils (1) wirkende Anpresskraft (F) ausgeübt wird.
